# DEMANDE DE BREVET EUROPEEN

(11) **EP 1 837 239 A1**
(43) Date de publication de la demande: **26.09.2007**
(21) Numéro de dépôt: 07290351.1
(22) Date de dépôt: 22.03.2007
(51) Int. Cl.: B60R 5/04, B29C 45/14

(54) **Tablette pour compartiment à bagages de véhicule automobile comprenant un bord tombé formant un angle aigu**

(30) Priorité: 23.03.2006 FR 0602534
(71) Demandeur: Centre d'etude et de recherche pour l'automobile (CERA), 51100 Reims (FR)
(72) Inventeur: Brillon, Eric, 51140 Chalons sur Vesle (FR); Bonhomme, Patrick, 51500 Taissy (FR)
(74) Mandataire: Sayettat, Julien Christian

(57) **Abrégé**

L'invention concerne une tablette (1) de recouvrement du compartiment à bagages d'un véhicule automobile destinée à être disposée en contiguïté avec des éléments périphériques (2) dudit véhicule, tels que des ébénisteries, ladite tablette comprenant une âme (3) à base de mousse rigide surmoulant une coque d'aspect (4) à base de matériau souple thermoformé, ladite coque d'aspect présentant au moins une face supérieure (5) et un bord tombé (6). Ledit bord tombé forme un angle aigu (7) avec au moins une partie de la périphérie (8) de ladite face supérieure. L'invention concerne également un élément périphérique d'une telle tablette, un ensemble comprenant une telle tablette et un tel élément périphérique, ainsi que des procédés de réalisation d'une telle tablette.

## Description

L'invention concerne une tablette de recouvrement du compartiment à bagages d'un véhicule automobile, un élément périphérique d'une telle tablette, un ensemble comprenant une telle tablette et un tel élément périphérique, ainsi que des procédés de réalisation d'une telle tablette.

On connaît une tablette de recouvrement du compartiment à bagages d'un véhicule automobile destinée à être disposée en contiguïté avec des éléments périphériques dudit véhicule, tels que des ébénisteries, ladite tablette comprenant une âme à base de mousse rigide, notamment à base de polyuréthanne, surmoulant une coque d'aspect, ladite coque d'aspect présentant au moins une face supérieure et un bord tombé, ledit bord tombé formant un angle obtus avec la périphérie de ladite face supérieure.

Le fait que ledit angle soit réalisé obtus correspond au fait qu'il est difficile de réaliser une coque d'aspect présentant un angle aigu, ceci du fait que ladite coque d'aspect est conformée directement dans le moule de moulage de la mousse, par poussée de la mousse sur un flan non mis en forme au préalable, ou bien que, lorsque ladite coque d'aspect est thermoformée avant surmoulage par la mousse, il s'avère difficile de l'extraire du moule de thermoformage du fait de l'existence d'une contre dépouille.

Or, un tel angle obtus présente l'inconvénient d'empêcher un bon accostage de la tablette avec des éléments périphériques du véhicule, tels que des ébénisteries, lorsque la tablette est prévue amovible. Il faudrait en effet, pour réaliser un accostage optimal, prévoir que ledit élément périphérique présente une surface inclinée en contre dépouille par rapport à la verticale de sorte à pouvoir recevoir sensiblement contre elle le bord tombé de la tablette une fois montée dans le véhicule, ce qui empêcherait l'extraction de la tablette, qui perdrait de ce fait son caractère amovible.

L'invention a pour but de pallier cet inconvénient en proposant un agencement de tablette dont le bord tombé forme un angle aigu avec au moins une partie de la périphérie de la face supérieure, ceci permettant d'optimiser l'accostage avec des éléments périphériques.

A cet effet, et selon un premier aspect, l'invention propose une tablette de recouvrement du compartiment à bagages d'un véhicule automobile destinée à être disposée en contiguïté avec des éléments périphériques dudit véhicule, tels que des ébénisteries, ladite tablette comprenant une âme à base de mousse rigide surmoulant une coque d'aspect à base de matériau souple thermoformé, ladite coque d'aspect présentant au moins une face supérieure et un bord tombé, ledit bord tombé formant un angle aigu avec au moins une partie de la périphérie de ladite face supérieure.

De la sorte, l'accostage de la tablette avec des éléments périphériques peut être optimisé, le bord tombant pouvant être placé sensiblement contre une surface prévue à cet effet respectivement sur les éléments périphériques.

Dans cette description, les termes de positionnement dans l'espace (transversal, latéral, supérieur, vertical, ...) sont pris en référence à la tablette disposée dans le véhicule.

Selon un deuxième aspect, l'invention propose un élément périphérique d'une telle tablette, ledit élément périphérique présentant une surface inclinée en dépouille par rapport à la verticale de sorte à pouvoir recevoir sensiblement contre elle le bord tombé de ladite tablette une fois montée dans le véhicule.

Selon un troisième aspect, l'invention propose un ensemble comprenant une telle tablette et au moins un tel élément périphérique, ladite tablette étant pourvue d'une coque d'aspect comprenant un bord tombé formant un angle aigu avec la périphérie de sa face supérieure et ledit élément périphérique présentant une surface inclinée en dépouille par rapport à la verticale de sorte à recevoir sensiblement contre elle le bord tombé de ladite tablette une fois montée dans le véhicule.

Selon un quatrième aspect, l'invention propose un procédé de réalisation d'une telle tablette, ledit procédé comprenant les étapes suivantes :
- réaliser par thermoformage une coque d'aspect présentant au moins une face supérieure et un bord tombé formant un angle aigu avec au moins une partie de la périphérie de ladite face supérieure,
- disposer ladite coque d'aspect dans la cuve d'un moule dont le couvercle est revêtu d'une coque d'envers,
- injecter un mélange précurseur de mousse rigide de sorte à former une âme dans l'espace défini par lesdites coques,
- démouler la tablette obtenue, après déplacement d'au moins un tiroir prévu dans le moule pour permettre le démoulage.

En variante, ledit procédé comprend les étapes suivantes :
- réaliser par thermoformage une coque d'aspect présentant au moins une face supérieure et un bord tombé formant un angle obtus avec au moins une partie de la périphérie de ladite face supérieure,
- disposer ladite coque d'aspect dans la cuve d'un moule dont le couvercle est revêtu d'une coque d'envers et rabattre ledit bord tombé avec un moyen de rabattement prévu dans le moule à cet effet, de sorte qu'il forme un angle aigu avec au moins une partie de la périphérie de ladite face supérieure,
- injecter un mélange précurseur de mousse rigide de sorte à former une âme dans l'espace défini par lesdites coques,
- démouler la tablette obtenue.

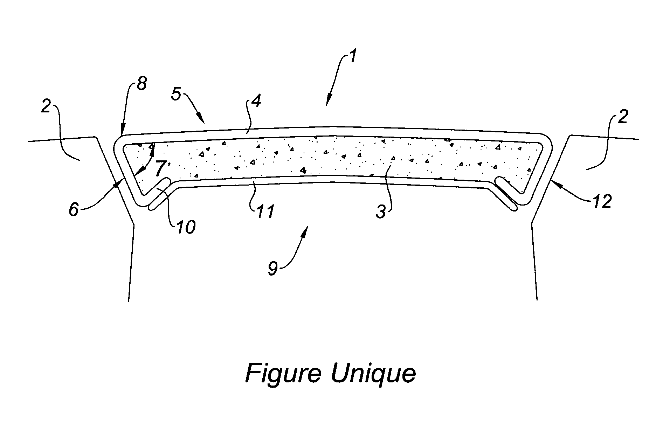

D'autres particularités et avantages de l'invention apparaîtront dans la description qui suit, faite en référence à la figure jointe qui est une vue schématique en coupe transversale d'une tablette disposée contre des ébénisteries latérales d'un véhicule automobile.

En référence à la figure, on décrit à présent une tablette 1 de recouvrement du compartiment à bagages 9 d'un véhicule automobile destinée à être disposée en contiguïté avec des éléments périphériques 2 dudit véhicule, tels que des ébénisteries, ladite tablette comprenant une âme 3 à base de mousse rigide, notamment à base de polyuréthanne, surmoulant une coque d'aspect 4 à base de matériau souple thermoformé, notamment à base d'aiguilleté, ladite coque d'aspect présentant au moins une face supérieure 5 et un bord tombé 6, ledit bord tombé formant un angle aigu 7 avec au moins une partie de la périphérie 8 de ladite face supérieure.

Selon la réalisation représentée, le bord tombé 6 forme un angle aigu 7 avec au moins la partie de la périphérie 8 de la face supérieure 5 correspondant aux bords latéraux de la tablette 1.

Selon la réalisation représentée, la coque d'aspect 4 comprend en outre un rebord rentrant 10 prolongeant le bord tombé 6, la tablette 1 comprenant en outre une coque d'envers 11 s'étendant sur ledit rebord rentrant de sorte à le masquer.

De façon non représentée, un joint en mousse issu de l'âme 3 est formé entre la coque d'envers 11 et le rebord rentrant 10, de sorte à permettre leur association entre eux.

Selon une réalisation, au moins une coque 4,11 est à base de matériau poreux imprégné partiellement dans son épaisseur par la mousse, de sorte à la rigidifier.

Un élément périphérique 2 d'une tablette 1, tel que représenté, présente une surface inclinée 12 en dépouille par rapport à la verticale de sorte à pouvoir recevoir sensiblement contre elle le bord tombé 6 de ladite tablette une fois montée dans le véhicule.

L'invention propose aussi un ensemble comprenant une tablette 1 et au moins un élément périphérique 2.

On décrit à présent un procédé de réalisation d'une tablette 1, ledit procédé comprenant les étapes suivantes :
- réaliser par thermoformage une coque d'aspect 4 présentant au moins une face supérieure 5 et un bord tombé 6 formant un angle aigu 7 avec au moins une partie de la périphérie 8 de ladite face supérieure, le démoulage du moule de thermoformage étant rendu possible du fait de la souplesse de ladite coque d'aspect,
- disposer ladite coque d'aspect dans la cuve d'un moule dont le couvercle est revêtu d'une coque d'envers 11,
- injecter un mélange précurseur de mousse rigide de sorte à former une âme 3 dans l'espace défini par lesdites coques,
- démouler la tablette 1 obtenue, après déplacement d'au moins un tiroir prévu dans le moule pour permettre le démoulage.

En variante, ledit procédé comprend les étapes suivantes :
- réaliser par thermoformage une coque d'aspect 4 présentant au moins une face supérieure 5 et un bord tombé 6 formant un angle obtus avec au moins une partie de la périphérie 8 de ladite face supérieure, ceci permettant plus aisément son démoulage du moule de thermoformage,
- disposer ladite coque d'aspect dans la cuve d'un moule dont le couvercle est revêtu d'une coque d'envers 11 et rabattre ledit bord tombé avec un moyen de rabattement prévu dans le moule à cet effet, de sorte qu'il forme un angle aigu 7 avec au moins une partie de la périphérie 8 de ladite face supérieure,
- injecter un mélange précurseur de mousse rigide de sorte à former une âme 3 dans l'espace défini par lesdites coques,
- démouler la tablette 1 obtenue.

## Revendications

1. Tablette (1) de recouvrement du compartiment à bagages d'un véhicule automobile destinée à être disposée en contiguïté avec des éléments périphériques (2) dudit véhicule, tels que des ébénisteries, ladite tablette comprenant une âme (3) à base de mousse rigide surmoulant une coque d'aspect (4) à base de matériau souple thermoformé, ladite coque d'aspect présentant au moins une face supérieure (5) et un bord tombé (6), ladite tablette étant **caractérisée en ce que** ledit bord tombé forme un angle aigu (7) avec au moins une partie de la périphérie (8) de ladite face supérieure.

2. Tablette (1) selon la revendication 1, le bord tombé (6) formant un angle aigu (7) avec au moins la partie de la périphérie (8) de la face supérieure (4) correspondant aux bords latéraux de ladite tablette.

3. Tablette (1) selon l'une des revendications 1 ou 2, la coque d'aspect (4) comprenant en outre un rebord rentrant (10) prolongeant le bord tombé (6), ladite tablette comprenant en outre une coque d'envers (11) s'étendant sur ledit rebord rentrant de sorte à le masquer.

4. Tablette (1) selon la revendication 3, un joint en mousse issu de l'âme (3) étant formé entre la coque d'envers (11) et le rebord rentrant (10), de sorte à permettre leur association entre eux.

5. Tablette (1) selon l'une quelconque des revendications 1 à 4, au moins une coque (4,11) étant à base de matériau poreux imprégné partiellement dans son épaisseur par la mousse, de sorte à la rigidifier.

6. Ensemble comprenant une tablette (1) selon l'une quelconque des revendications 1 à 5 et au moins un élément périphérique (2), ladite tablette étant pourvue d'une coque d'aspect (4) comprenant un bord tombé (6) formant un angle aigu (7) avec la périphérie (8) de sa face supérieure (5) et ledit élément périphérique présentant une surface inclinée (12) en dépouille par rapport à la verticale de sorte à recevoir sensiblement contre elle ledit bord tombé de ladite tablette une fois montée dans le véhicule.

7. Procédé de réalisation d'une tablette (1) selon l'une quelconque des revendications 1 à 5, ledit procédé comprenant les étapes suivantes :
• réaliser par thermoformage une coque d'aspect (4) présentant au moins une face supérieure (5) et un bord tombé (6) formant un angle aigu (7) avec au moins une partie de la périphérie (8) de ladite face supérieure,
• disposer ladite coque d'aspect dans la cuve d'un moule dont le couvercle est revêtu d'une coque d'envers (11),
• injecter un mélange précurseur de mousse rigide de sorte à former une âme dans l'espace défini par lesdites coques,
• démouler la tablette (1) obtenue, après déplacement d'au moins un tiroir prévu dans le moule pour permettre le démoulage.

8. Procédé de réalisation d'une tablette (1) selon l'une quelconque des revendications 1 à 5, ledit procédé comprenant les étapes suivantes :
• réaliser par thermoformage une coque d'aspect (4) présentant au moins une face supérieure (5) et un bord tombé (6) formant un angle obtus avec au moins une partie de la périphérie (8) de ladite face supérieure,
• disposer ladite coque d'aspect dans la cuve d'un moule dont le couvercle est revêtu d'une coque d'envers (11) et rabattre ledit bord tombé avec un moyen de rabattement prévu dans le moule à cet effet, de sorte qu'il forme un angle aigu (7) avec au moins une partie de la périphérie (8) de ladite face supérieure,
• injecter un mélange précurseur de mousse rigide de sorte à former une âme (3) dans l'espace défini par lesdites coques,
• démouler la tablette (1) obtenue après retrait dudit moyen de rabattement.
